# EUROPEAN PATENT APPLICATION

(11) **EP 4 556 270 A1**
(43) Date of publication of application: **21.05.2025**
(21) Application number: 23856563.4
(22) Date of filing: 21.08.2023
(51) Int. Cl.: B60J 1/10, B60J 10/75, B29C 45/14

(54) **VEHICLE WINDOW ENCAPSULATION STRUCTURAL MEMBER, VEHICLE WINDOW, AND METHOD FOR MANUFACTURING VEHICLE WINDOW ENCAPSULATION STRUCTURAL MEMBER**

(30) Priority: 22.08.2022 CN 202211004686
(71) Applicant: Fuyao Glass Industry Group Co., Ltd., Fuqing, Fujian 350300 (CN)
(72) Inventor: JIANG, Lixing, Fuzhou, Fujian 350300 (CN); WANG, Min, Fuzhou, Fujian 350300 (CN); LIN, Conglong, Fuzhou, Fujian 350300 (CN); LIN, Qiming, Fuzhou, Fujian 350300 (CN)
(74) Representative: Patentanwälte Olbricht Buchhold Keulertz
(86) International application number: PCT/CN2023/113959
(87) International publication number: WO 2024/041473

(57) **Abstract**

The present disclosure provides a vehicle window encapsulation structural member, a vehicle window, and a method for manufacturing the vehicle window encapsulation structural member. The vehicle window encapsulation structural member comprises an encapsulation member (1) and a memory alloy member (2) disposed in the encapsulation member (1), a deformation amount is preset for the memory alloy member (2), and the memory alloy member (2) is deformable according to the preset deformation amount between a high-temperature phase shape and a low-temperature phase shape, so that the encapsulation member (1) in a mounted state is adaptive to a vehicle body environment member (3). The present disclosure optimizes the reliability of the adaptability between the vehicle window encapsulation structure and the vehicle body environment member, saves the cost, and increases the feedback and the modification rate of the vehicle window encapsulation structure for the adaptation degree.

## Description

### RELATED APPLICATION

This application claims priority of the Chinese Patent No.202211004686.2, a title of "vehicle window encapsulation structural member, vehicle window, and method for manufacturing vehicle window encapsulation structural member" and filed on August 22, 2022.

### TECHNICAL FIELD

The present disclosure relates to the field of vehicles, further to a vehicle window encapsulation structural member, a vehicle window, and a method for manufacturing the vehicle window encapsulation structural member, and particularly to a vehicle window encapsulation structural member internally including a memory alloy, a vehicle window, and a method for manufacturing the vehicle window encapsulation structural member.

### BACKGROUND

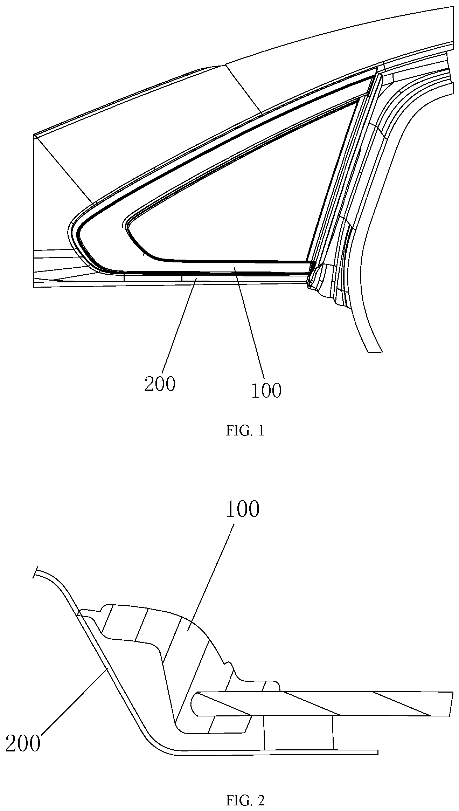

With the continuous development of the vehicle manufacturing industry, consumers and manufacturers have increasingly higher requirements for the exquisite perception of vehicle styling. As illustrated in FIGS. 1 and 2, a good adaption effect (an attachment, or a gap or a gradual gap that meets the adaption requirement) is achieved between a tongue of a vehicle window encapsulation structure 100 and a vehicle environment member 200, which is one of the components to enhance the exquisite perception of the vehicle styling.

In consideration of the product manufacturing tolerance, the mounting tolerance, the sheet metal tolerance, etc., in order to achieve a good attachment or a gap that meets the adaption requirement between the tongue of the vehicle window encapsulation structure 100 and the vehicle environment member 200, a pre-deformation effect should be considered during the manufacturing of the vehicle window encapsulation structure 100, so as to absorb the above tolerances. A pre-deformation amount of 0 to 15 mm is generally reserved.

However, at this stage, due to the differences in vehicle styling, the vehicle environment member 200 cannot be standardized, such that the types of the encapsulation structures designed according to the fitting conditions of the vehicle environment member 200 are diverse and of great differences and the standardization cannot be realized. The differences in the encapsulation structure (e.g., the size of a encapsulation or an insert fluctuates in a range of 0 to 5 mm) will cause the size of a product (e.g., the size of glass fluctuates in a range of 0.5 mm to 3.0 mm) to fluctuate in a wide range, and the pre-deformation amount of each structural member can only be determined by experience and evaluation. In addition, due to the differences in the sheet metal materials and the manufacturing capabilities of various manufacturers, the size of the vehicle environment member 200 such as the sheet metal may be controlled within a range of 0 mm to 2 mm. Due to the above reasons, it is difficult for the initial vehicle window encapsulation structure 100 to achieve an ideal adaption state with the vehicle environment member 200 at one time after being loaded, and a good adaption effect can only be achieved through rounds of mutual adjustment and matching.

Therefore, in the initial solution of the design of the vehicle window encapsulation structure 100, it usually needs to classify the data into the theoretical effect data of loading and the development data of the pre-deformation amount of the vehicle window encapsulation structure 100, such that the data is numerous, the workload is large, and it is necessary to reevaluate and design the pre-deformation amount and the development data according to the actual effect after product loading (whether a good attachment or a gap that meets the adaption requirement is achieved). In most cases, it is impossible to achieve one-time design and molding, and only through multiple "trial and error" and modification in the early stage, an attachment or a gap that meets the adaptation requirement can be achieved at a corresponding position (e.g., between the tongue of the vehicle window encapsulation structure 100 and the vehicle environment member 200). Thus, the mold needs to be modified for many times (e.g., the mold is subjected to milling, repair welding, surface descending, or even mold core replacement). As a result, not only a lot of manpower and material resources are consumed, but also the time required in the modification process cannot be determined, and the delivery time of the product also cannot be controlled. In addition, during the long-term use, the existing vehicle window encapsulation structure 100 is prone to aging due to the change of the ambient temperature, such that elasticity is lost and a gap is generated due to deformation, which cannot achieve the preset loading effect.

In view of the above content, the present disclosure proposes a vehicle window encapsulation structural member, a vehicle window and a method for manufacturing the vehicle window encapsulation structural member to overcome the defects of the prior art.

### SUMMARY

The present disclosure aims to provide a vehicle window encapsulation structural member, a vehicle window and a method for manufacturing the vehicle window encapsulation structural member, wherein a memory alloy member is disposed in a vehicle window encapsulation structure, and a pre-deformation range of the memory alloy member is preset through the phase transition characteristics of the memory alloy member at different temperatures, so that the time of trial and error and modification is shortened, the vehicle window encapsulation structure can meet the adaption with a vehicle body environment member, and the production efficiency and the product quality are improved.

The above objective of the present disclosure can be achieved by adopting the following technical solutions:

The present disclosure provides a vehicle window encapsulation structural member, comprising an encapsulation member and a memory alloy member disposed in the encapsulation member, wherein a deformation amount is preset for the memory alloy member, and the memory alloy member is deformable according to the preset deformation amount between a high-temperature phase shape and a low-temperature phase shape, so that the encapsulation member in a mounted state is adaptive to a vehicle body environment member.

The present disclosure provides a vehicle window, comprising glass and the aforementioned vehicle window encapsulation structural member, wherein the vehicle window encapsulation structural member is connected to an edge of the glass, and is attached to the vehicle body environment member or has a gap meeting an adaptation requirement therebetween.

The present disclosure provides a method for manufacturing a vehicle window encapsulation structural member, comprising steps of:
Step S1: presetting a deformation amount of a memory alloy member;
Step S2: heating the memory alloy member into a high-temperature phase shape, and deforming the memory alloy member into a theoretical shape;
Step S3: injection molding the memory alloy member in the theoretical shape and the encapsulation member to obtain a vehicle window encapsulation structural member in a theoretical shape; and
Step S4: cooling the vehicle window encapsulation structural member until the memory alloy member is in a low-temperature phase shape, and restoring the memory alloy member to the preset deformation amount, so as to obtain the vehicle window encapsulation structural member in a loading shape.

The present disclosure has the following advantageous effects:

The memory alloy member is added in the vehicle window encapsulation structural member, and the memory alloy member is deformed between the high-temperature phase shape and the low-temperature phase shape according to the preset deformation amount through the phase transition characteristics of the memory alloy member at different temperatures, so as to adapt the encapsulation member in the mounted state to the vehicle body environment member, thereby shortening the time of trial-and -error and modification in the manufacturing process of the encapsulation member, ensuring that the encapsulation member can meet the adaptation with the vehicle body environment member, and improving the production efficiency and the product quality.

According to the method for manufacturing the vehicle window encapsulation structural member, the memory alloy member is added in the encapsulation member, the deformation amount of the memory alloy member is preset through the phase transition characteristics of the memory alloy member at different temperatures, so as to adapt the encapsulation member in the mounted state to the vehicle body environment member, thereby shortening the modification time in the manufacturing process of the encapsulation member and reducing the trial-and-error loss.

According to the method for manufacturing the vehicle window encapsulation structural member, the deformation amount of the encapsulation member is preset through the phase transition characteristics of the memory alloy member at different temperatures, so as to reduce the design workload of the pre-deformation of the encapsulation member, improve the production efficiency, and ensure the product quality.

According to the method for manufacturing the vehicle window encapsulation structural member, the memory alloy member is added in the encapsulation member to replace the reinforcing member in the encapsulation member and improve the strength of the encapsulation member.

### BRIEF DESCRIPTION OF THE DRAWINGS

The following drawings are only for schematic illustration and explanation of the present disclosure, rather than limiting the scope of the present disclosure. In which:
FIG. 1 illustrates a structural diagram of a vehicle window position in the prior art.
FIG. 2 illustrates a structural diagram of a vehicle window encapsulation structure assembled with a vehicle environment member in the prior art.
FIG. 3 illustrates a first structural diagram of a vehicle window encapsulation structural member of the present disclosure.
FIG. 4 illustrates a second structural diagram of a vehicle window encapsulation structure of the present disclosure.
FIG. 5 illustrates a schematic diagram of a partial position in FIG. 2.
FIG. 6 illustrates a schematic diagram of positions of an encapsulation member and the vehicle body environment member when a memory alloy member in a vehicle window encapsulation structural member of the present disclosure is in a high-temperature phase shape.
FIG. 7 illustrates a partial enlarged view of position A in FIG. 6.
FIG. 8 illustrates a schematic diagram of positions of an encapsulation member and a vehicle body environment member when a memory alloy member in a vehicle window encapsulation structural member of the present disclosure is in a low-temperature phase shape.
FIG. 9 illustrates a partial enlarged view of position B in FIG. 8.
FIG. 10 illustrates a third structural diagram of a vehicle window encapsulation structural member of the present disclosure.
FIG. 11 illustrates a fourth structural diagram of a vehicle window encapsulation structural member of the present disclosure.
FIG. 12 illustrates a first process flowchart of a method for manufacturing a vehicle window encapsulation structural member of the present disclosure.
FIG. 13 illustrates a second process flowchart of a method for manufacturing a vehicle window encapsulation structural member of the present disclosure.

### DETAILED DESCRIPTION OF THE EMBODIMENTS

In order to have a clearer understanding of the technical features, objectives and effects of the present disclosure, the specific embodiments of the present disclosure are described below with reference to the drawings.

### Embodiment 1

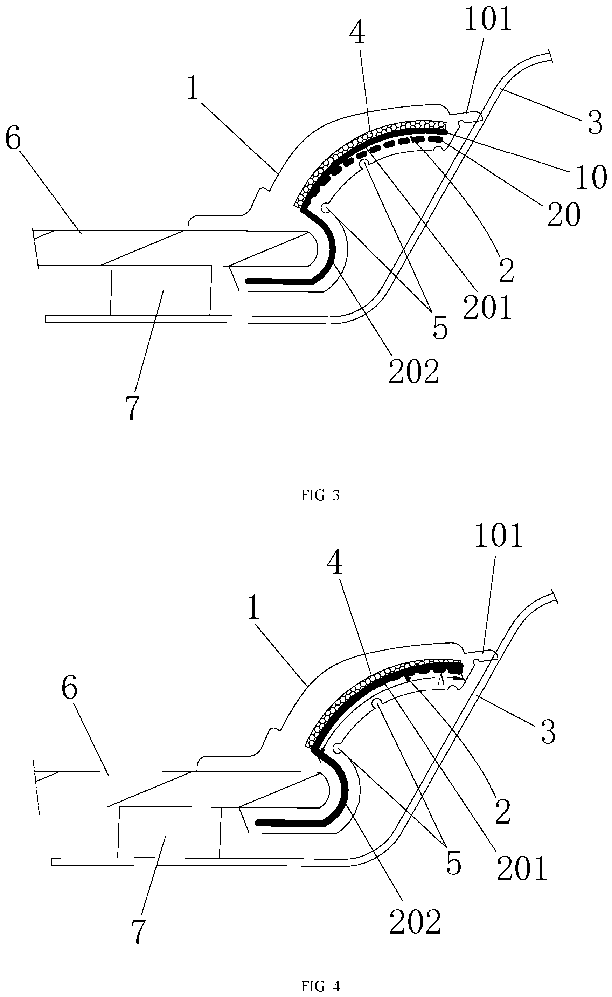

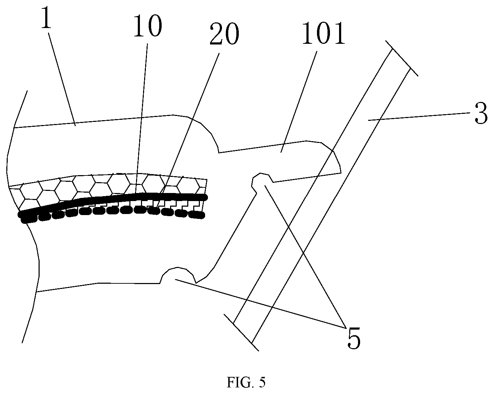

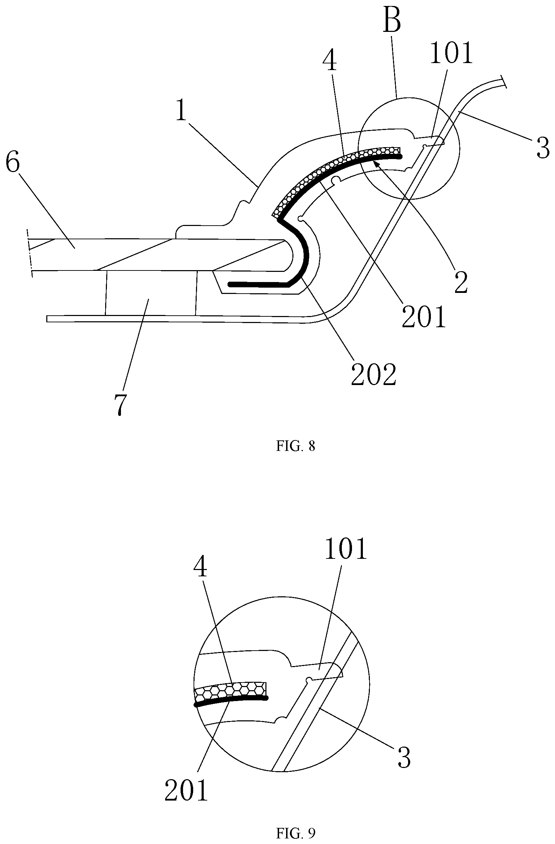

As illustrated in FIGS. 3 to 11, the present disclosure provides a vehicle window encapsulation structural member, which includes an encapsulation member 1 and a memory alloy member 2, in which the memory alloy member 2 is disposed inside the encapsulation member 1. By presetting a deformation amount of the memory alloy member 2, the memory alloy member 2 is deformable according to the preset deformation amount between a high-temperature phase shape and a low-temperature phase shape, so that the encapsulation member 1 is adaptive to the vehicle body environment member 3 when being mounted in cooperation therewith.

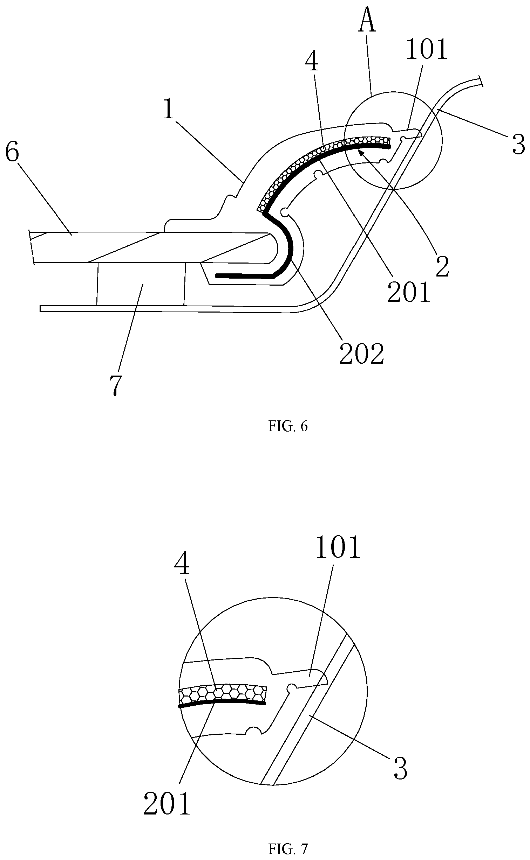

FIGS. 3 to 5 in the present disclosure are intended to illustrate the deformations of the memory alloy member 2 in the high-temperature phase shape and the low-temperature phase shape respectively. In actual situations, due to the deformation of the memory alloy member 2, the encapsulation member 1 is also deformed (i.e., a positional relationship between the encapsulation member 1 and the vehicle body environment member 3 changes), while the deformation of the encapsulation member 1 may be illustrated in FIGS. 6 to 9, but not in FIGS. 3 to 5.

In which, the encapsulation member 1 is adaptive to the vehicle body environment member 3, i.e., the encapsulation member 1 and the vehicle body environment member 3 meet the loading requirement. In which, there included at least the situations that the tongue 101 of the encapsulation member 1 is attached to the vehicle body environment member 3, and a gap meeting the adaptation requirement is existed between the encapsulation member 1 and the vehicle body environment member 3 (the gap may be a uniform gap or a gap with a gradually changing width, which is determined based on the actual assembly requirements).

Further, the vehicle body environment member 3 may be, but not limited to, a sheet metal structure, a sealing structure, a plastic structure or any other components on the vehicle body, which needed to be mounted in cooperation with the encapsulation member 1.

According to the present disclosure, the memory alloy member 2 is added in the encapsulation member 1, the deformation amount of the memory alloy member 2 is preset, and the memory alloy member 2 is deformed between the high-temperature phase shape and the low-temperature phase shape according to the preset deformation amount through the phase transition characteristics of the memory alloy member 2 at different temperatures, so as to adapt the encapsulation member 1 in the mounted state to the vehicle body environment member 3, thereby shortening the time of trial-and-error and modification in the manufacturing process of the encapsulation member 1, ensuring that the encapsulation member 1 can meet the adaptation with the vehicle body environment member 3, and improving the production efficiency and the product quality.

In an alternative embodiment of the present disclosure, the memory alloy member 2 is exemplarily a two-way memory alloy, which can be deformed into the high-temperature phase shape after being heated, and returns to the low-temperature phase shape after being cooled. The low-temperature phase shape of the memory alloy member 2 is adaptive to the vehicle body environment member 3.

Specifically, the memory alloy member 2 is made of a Shape Memory Alloy (SMA), which may be made of but not limited to an iron-based memory alloy. The shape memory alloy has the characteristics of shape memory effect, super-elasticity, high damping, etc., which can sense the temperature change, convert the thermal energy into the mechanical energy, and output a force or a displacement, or store and release energy. Because the memory alloy member 2 in the present disclosure is applied to the vehicle window encapsulation structure member, and the temperature of the normal production environment of vehicles is lower than 130 °C, it is possible to select an iron-based memory alloy with a high-temperature phase transition temperature between 100 °C and 130 °C and a low-temperature phase transition temperature between 30 °C and 70 °C, so that the memory alloy member 2 can be deformed under the corresponding conditions of the high-temperature phase transition temperature and the low-temperature phase transition temperature according to a preset deformation amount.

In an alternative embodiment of the present disclosure, as illustrated in FIGS. 3, 4, 6 and 8, the memory alloy member 2 includes a deformation section 201 and a support section 202. The deformation section 201 and the encapsulation member 1 are designed for profile matching (i.e., they have the same bending tendency, and similar or the same bending radian), one end of the deformation section 201 is connected to the support section 202, and the other end of the deformation section 201 is extended in a direction adapting to the vehicle body environment member 3 (in this embodiment, the deformation section 201 is extended toward the vehicle body environment member 3). The encapsulation member 1 corresponding to the support section 202 is connected to the vehicle window glass, the deformation section 201 is preset with a deformation amount adaptive to the vehicle body environment member 3, and the encapsulation member 1 corresponding to the deformation section 201 is inclined in a direction adapting to the vehicle body environment member 3 (in this embodiment, the encapsulation member 1 corresponding to the deformation section 201 is inclined toward the vehicle body environment member 3), so that the encapsulation member 1 can be attached to the vehicle body environment member 3, or there is a gap meeting the adaption requirement between the encapsulation member 1 and the vehicle body environment member 3. In the phase transition process, only the deformation section 201 is bent and deformed, and the support section 202 is disposed to support and fix the deformation section 201 in the encapsulation member 1.

In this embodiment, as illustrated in FIGS. 3, 4, 6 and 8, a cross-section of the deformation section 201 is in an arc shape bent toward the vehicle body environment member 3, and the deformation section 201 is preset with a deformation amount bent toward the vehicle body environment member 3 (i.e., when the memory alloy member 2 is in the low-temperature phase shape, the deformation section 201 is closer to the vehicle body environment member 3). Of course, according to different assembly requirements, the deformation section 201 may be preset with a deformation amount bent away from the vehicle body environment member 3 (i.e., when the memory alloy member 2 is in the high-temperature phase shape, the deformation section 201 is closer to the vehicle body environment member 3). The shape, the deformation amount and the deformation direction of the deformation section 201 may be determined according to theoretical modeling.

Further, as illustrated in FIGS. 3, 4, 6 and 8, the encapsulation member 1 corresponding to the support section 202 is connected to vehicle window glass 6. The encapsulation member 1 corresponding to the support section 202 may be fixedly hemmed around edges of the vehicle window glass 6, and at least part of the support section 202 is hemmed around the edges of the vehicle window glass 6 along the encapsulation member 1. Of course, the encapsulation member 1 corresponding to the support section 202 is also fixed on the surface of the vehicle window glass 6 in other forms, so long as the stable mounting of the vehicle window encapsulation structural member can be ensured.

In an alternative embodiment of the present disclosure, as illustrated in FIGS. 3 to 9, a surface of a side of the deformation section 201 away from the vehicle body environment member 3 is provided with a foaming cushion layer 4 along an extension direction of the deformation section 201, and there is no adhesive force or there is a weak adhesive force between a surface of a side of the deformation section 201 facing the vehicle body environment member 3 and an inner contact surface A of the encapsulation member 1 (this can be achieved by providing an anti-adhesion layer between the deformation section 201 and the inner contact surface of the encapsulation member 1).

After the mounting, when the memory alloy member 2 transitions from the high-temperature phase shape to the low-temperature phase shape, the encapsulation member 1 is adaptive to the vehicle body environment member 3. Even if the memory alloy member 2 is restored to the high-temperature phase shape later, an inner surface of the encapsulation member 1 may not be deformed along with the memory alloy member 2, but remains an adaption with the vehicle body environment member 3, because there is no adhesive force or there is a weak adhesive force between the deformation section 201 and the encapsulation member 1. In addition, since the foaming cushion layer 4 is disposed between the surface of the encapsulation member 1 and the deformation section 201 of the memory alloy member 2 and the foaming cushion layer 4 is elastic, the inner surface of the encapsulation member 1 may be deformed to adjust the gap with the vehicle body environment member 3 during the process of the deformation of the memory alloy member 2 from the high-temperature phase shape to the low-temperature phase shape, and the provision of the foaming cushion layer 4 can reduce the deformation of the outer surface of the encapsulation member 1 along with stretching of the memory alloy member 2 toward the vehicle body environment member 3, thereby helping to reduce the deformation amount of the outer surface of the encapsulation member 1, preventing the deformation of the encapsulation member 1 from largely affecting the appearance, and ensuring the aesthetic of the product.

Further, the foaming buffer layer 4 may be connected to the surface of the deformation section 201 by injection molding or bonding, but not limited thereto. In which, the foaming cushion layer 4 may be made of, but not limited to, a low-density and soft foaming material.

In an alternative embodiment of the present disclosure, as illustrated in FIGS. 3, 4, 6 and 8, at least one deformation groove 5 is disposed on one side of the encapsulation member 1 in the same direction as a pre-deformation direction thereof. In which, the deformation groove 5 may be disposed between the tongue 101 of the encapsulation member 1 and the deformation section 201, or at a middle position of the deformation section 201, or at a connection position between the deformation section 201 and the support section 202. The number, the specific position and the shape of the deformation groove 5 may be set according to a bending shape and a bending amplitude of the encapsulation member 1, which are not limited here, so long as the encapsulation member 1 can meet the positional relationship with the vehicle body environment member 3 in a loading state.

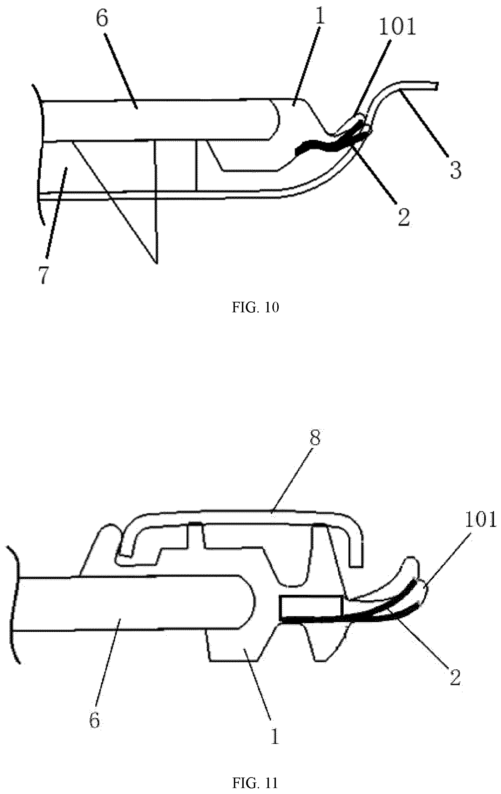

In an alternative embodiment of the present disclosure, as illustrated in FIG. 11, the surface of the encapsulation member 1 is provided with a decorative member 8, so as to achieve decorative and aesthetic effects, and also protect the encapsulation member 1 at some extent.

Further, the decorative member 8 may be, but not limited to, a bright strip.

### Embodiment 2

As illustrated in FIGS. 3 to 11, the present disclosure provides a vehicle window, which includes glass 6 and the aforementioned vehicle window encapsulation structural member, in which the vehicle window encapsulation structural member is connected to the edge of the glass 6, and attached to the vehicle body environment member 3 or has a gap meeting the adaptation requirement therebetween to meet the loading requirement.

Further, as illustrated in FIGS. 3, 4, 6, 8 and 10, the glass 6 and the vehicle body environment member 3 are bonded and fixed by an adhesive layer 7. In which, the adhesive layer 7 may be, but is not limited to, a glue layer formed of PU glue.

### Embodiment 3

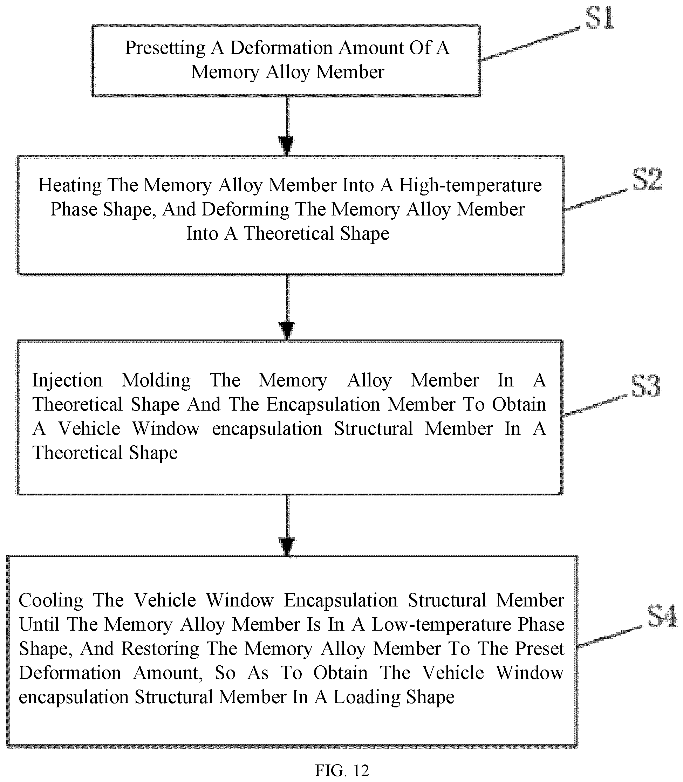

As illustrated in FIG. 12, the present disclosure provides a method for manufacturing a vehicle window encapsulation structural member, which includes:
Step S1: presetting a deformation amount of a memory alloy member 2, and presetting pre-deformation data of the memory alloy member 2 to mold a low-temperature phase shape of the memory alloy member 2;
Step S2: before injection molding, heating the memory alloy member 2 into a high-temperature phase shape, and deforming the memory alloy member 2 into a theoretical shape;
Step S3: injection molding the memory alloy member 2 in the theoretical shape (i.e., at a theoretical position 10) and the encapsulation member 1 to obtain a vehicle window encapsulation structural member in a theoretical shape.

Further, in Step S3, the memory alloy member 2 in the theoretical shape (i.e., at the theoretical position 10) and the encapsulation member 1 are put into a mold for integral injection molding.

Step S4: cooling the vehicle window encapsulation structural member until the memory alloy member 2 is in a low-temperature phase shape, restoring the memory alloy member 2 to the preset deformation amount, and adjusting the shape of the encapsulation member 1 back to a pre-deformation position 20 through the deformation of the memory alloy member 2, so as to obtain the vehicle window encapsulation structural member in a loading shape.

In an alternative embodiment of the present disclosure, before Step S1, it is necessary to acquire theoretical data of the vehicle window encapsulation structural member and develop a mold according to the theoretical data;
further, the theoretical data of the vehicle window encapsulation structural member at least includes theoretical data of the memory alloy member 2, theoretical data of the encapsulation member 1 and theoretical data of the glass 6.

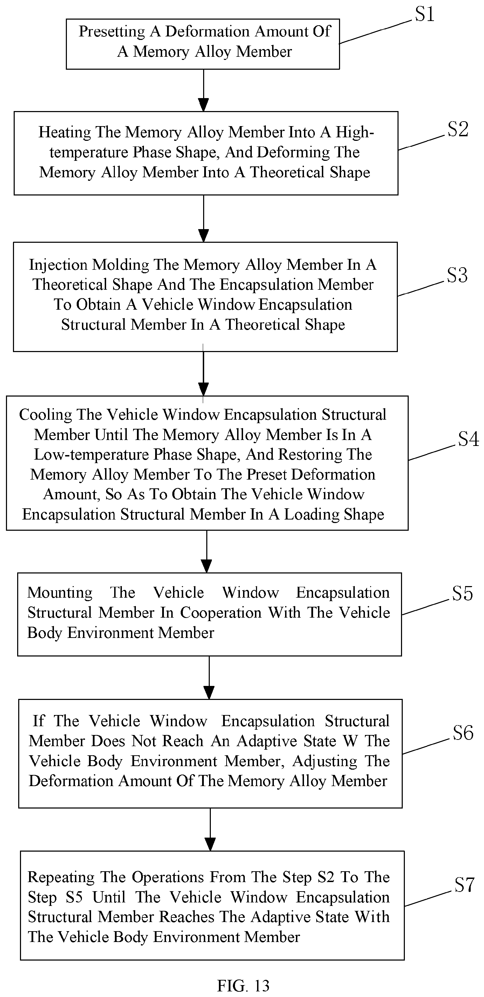

In an alternative embodiment of the present disclosure, as illustrated in FIG. 13, after Step S4, the method for manufacturing the vehicle window encapsulation structural member further includes:
Step S5: mounting the vehicle window encapsulation structural member and the vehicle body environment member 3 in cooperation;

Specifically, the vehicle window encapsulation structural member is put into a checking fixture, so as to check the assembly effect of the vehicle window encapsulation structural member and the environment member (vehicle body environment member 3).
Step S6: if the vehicle window encapsulation structural member and the vehicle body environment member 3 reach an adaptive state, the product is qualified; otherwise, it is only necessary to adjust the deformation amount of the memory alloy member 2 and reshape the low-temperature phase shape of the memory alloy member 2;
Step S7: repeating the operations from Step S2 to Step S5 until the vehicle window encapsulation structural member and the vehicle body environment member 3 reach the adaptive state.

In which, the adaptive state in Step S6 and Step S7 can be set according to the actual loading requirement.

Those described above are only illustrative embodiments of the present disclosure, and not intended to limit the scope thereof. Any equivalent change or modification made by those skilled in the art without departing from the concept and principle of the present disclosure should fall within the protection scope of the present disclosure.

## Claims

1. A vehicle window encapsulation structural member, comprising an encapsulation member and a memory alloy member disposed in the encapsulation member, wherein a deformation amount is preset for the memory alloy member, and the memory alloy member is deformable according to the preset deformation amount between a high-temperature phase shape and a low-temperature phase shape, so that the encapsulation member in a mounted state is adaptive to a vehicle body environment member.

2. The vehicle window encapsulation structural member according to claim 1, wherein the memory alloy member is a two-way memory alloy, which is deformable into the high-temperature phase shape after being heated, and returnable to the low-temperature phase shape after being cooled; and the two-way memory alloy in the low-temperature phase shape is adaptive to the vehicle body environment member.

3. The vehicle window encapsulation structural member according to claim 1, wherein the memory alloy member comprises a deformation section and a support section, the deformation section and the encapsulation member are designed for profile matching, one end of the deformation section is connected to the support section, and the other end of the deformation section is extended in a direction adapting to the vehicle body environment member.

4. The vehicle window encapsulation structural member according to claim 3, wherein the encapsulation member corresponding to the support section is connected to vehicle window glass, and the encapsulation member corresponding to the deformation section is inclined toward the vehicle body environment member, so that the encapsulation member is attached to the vehicle body environment member, or a gap meeting an adaption requirement is existed between the encapsulation member and the vehicle body environment member.

5. The vehicle window encapsulation structural member according to claim 4, wherein the encapsulation member corresponding to the support section is connected to the vehicle window glass.

6. The vehicle window encapsulation structural member according to claim 3, wherein the deformation section is preset with a deformation amount adaptive to the vehicle body environment member.

7. The vehicle window encapsulation structural member according to claim 3, wherein a foaming cushion layer is disposed on a side of the deformation section away from the vehicle body environment member along an extension direction of the deformation section.

8. The vehicle window encapsulation structural member according to claim 7, wherein there is no adhesive force or there is a weak adhesive force between a surface of a side of the deformation section facing the vehicle body environment member and an inner contact surface of the encapsulation member.

9. The vehicle window encapsulation structural member according to claim 3, wherein at least one deformation groove is disposed on the encapsulation member in the same direction as a pre-deformation direction of the encapsulation member.

10. The vehicle window encapsulation structural member according to claim 1, wherein a decorative member is disposed on the encapsulation member.

11. A vehicle window, comprising glass and the vehicle window encapsulation structural member according to any of claims 1 to 10, wherein the vehicle window encapsulation structural member is connected to an edge of the glass, and the vehicle window encapsulation structural member is attached to the vehicle body environment member or has a gap meeting an adaptation requirement therebetween.

12. The vehicle window according to claim 11, wherein the glass and the vehicle body environment member are bonded by an adhesive layer.

13. A method for manufacturing a vehicle window encapsulation structural member, comprising the steps of:
Step S1: presetting a deformation amount of a memory alloy member;
Step S2: heating the memory alloy member into a high-temperature phase shape, and deforming the memory alloy member into a theoretical shape;
Step S3: injection molding the memory alloy member in a theoretical shape and the encapsulation member to obtain a vehicle window encapsulation structural member in the theoretical shape; and
Step S4: cooling the vehicle window encapsulation structural member until the memory alloy member is in a low-temperature phase shape, and restoring the memory alloy member to the preset deformation amount, so as to obtain the vehicle window encapsulation structural member in a loading shape.

14. The method for manufacturing a vehicle window encapsulation structural member according to claim 13, wherein before the Step S1, theoretical data of the vehicle window encapsulation structural member is acquired and a mold is developed according to the theoretical data; wherein the theoretical data of the vehicle window encapsulation structural member at least comprises theoretical data of the memory alloy member and theoretical data of the encapsulation member.

15. The method for manufacturing a vehicle window encapsulation structural member according to claim 14, wherein in the Step S3, the memory alloy member in the theoretical shape and the encapsulation member are put into a mold for injection molding.

16. The method for manufacturing a vehicle window encapsulation structural member according to claim 15, wherein after the Step S4, the method further comprises:
Step S5: mounting the vehicle window encapsulation structural member in cooperation with the vehicle body environment member;
Step S6: if the vehicle window encapsulation structural member does not reach an adaptive state with the vehicle body environment member, adjusting the deformation amount of the memory alloy member; and
Step S7: repeating the operations from the Step S2 to the Step S5 until the vehicle window encapsulation structural member reaches the adaptive state with the vehicle body environment member.
